(19)

Europäisches
Patentamt
European
Patent Office
Office européen
des brevets

(11) **EP 3 524 721 A1**

(12) **EUROPEAN PATENT APPLICATION**
published in accordance with Art. 153(4) EPC

(43) Date of publication:
**14.08.2019 Bulletin 2019/33**

(21) Application number: **17858277.1**

(22) Date of filing: **27.09.2017**

(51) Int Cl.:
***D04B 1/16*** *(2006.01)*     ***D02G 3/04*** *(2006.01)*

(86) International application number:
**PCT/JP2017/035048**

(87) International publication number:
**WO 2018/066439 (12.04.2018 Gazette 2018/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.10.2016   JP 2016197072**

(71) Applicant: **Toray Industries, Inc.
Tokyo 103-8666 (JP)**

(72) Inventors:
• **HARADA, Masaru
  Otsu-shi
  Shiga 520-2141 (JP)**
• **TSUCHIKURA, Hiroshi
  Otsu-shi
  Shiga 520-2141 (JP)**

(74) Representative: **Mewburn Ellis LLP
City Tower
40 Basinghall Street
London EC2V 5DE (GB)**

(54) **FLAME-RESISTANT KNITTED FABRIC**

(57)    A flame resistant knit fabric having a thickness of 0.08 mm or more in accordance with the method of JIS L 1096-A (2010) and consisting of a yarn, said yarn comprising: a non-melting fiber A having a high-temperature shrinkage rate of 3% or less; and a thermoplastic fiber B having an LOI value of 25 or more in accordance with JIS K 7201-2 (2007) and having a melting point lower than the ignition temperature of the non-melting fiber A; wherein said yarn has a fracture elongation of 5% or more; and wherein, in the projection area of the knit repeat of the flame resistant knit fabric, the area ratio of the non-melting fiber A is 10% or more and the area ratio of the thermoplastic fiber B is 5% or more. A flame resistant knit fabric having high flame resistance is provided.

EP 3 524 721 A1

**EP 3 524 721 A1**

**Description**

TECHNICAL FIELD

The present invention relates to a flame resistant knit fabric.

BACKGROUND ART

A method that has conventionally been adopted in applications requiring flame retardance is one in which an agent having a flame retardant effect is kneaded into a polyester-based, nylon-based, or cellulose-based fiber at a raw yarn stage, or one in which the agent is supplied into such a fiber in a post-process.
Generally used flame retardants are halogen-based or phosphorus-based, and, in recent years, the substitution of phosphorus-based agents for halogen-based agents has been progressing owing to environmental regulations. However, phosphorus-based agents are surpassed by conventional halogen-based agents in the flame retardant effect.

Citation List

Patent Literature

In this regard, there is a method of imparting higher flame retardance, in which method a polymer having high flame retardance is used in a composite. For example, there are known composites, including: a composite of a meta-aramid which is a flame retardant polymer of a carbonized type, a flame retardance-treated polyester, and a modacrylic fiber (Patent Document 1); a composite of a meta-aramid and PPS (Patent Document 2); and a composite of a flame resistant yarn and a flame retardance treated-polyester (Patent Document 3).

Patent Literature 1: JP 11-293542 A
Patent Literature 2: JP 01-272836 A
Patent Literature 3: JP 2005-334525 A

SUMMARY OF INVENTION

Technical Problem

However, conventional flame retardant abilities are based on the LOI values specified in JIS and the flame retardancy standards specified in the Fire Service Law, and are the abilities exhibited under the conditions in which an ignition source and a heating time are standardized. Such abilities are not regarded as sufficient to prevent flame-spreading in a long time exposure to flame such as in an actual fire. Imparting a long time flame-spreading prevention effect requires a flame retardant material to be made sufficiently thick or the material to be composited with a noncombustible inorganic material, and accordingly causes not only a problem that the texture is significantly impaired and the flexibility is made poor but also a problem that the workability onto a curved surface is reduced.
According to the method described in Patent Literature 1, the composite has flexibility, a high LOI value in addition, and excellent flame retardance, but the meta-aramid is rapidly shrunk and hardened by an increase in temperature. Thus, the composite generates stress concentration locally, fails to maintain a textile form, and lacks the ability to block flame for a long time.
In addition, Patent Literature 2 discloses that forming a meta-aramid and PPS into a composite affords excellent chemical resistance and a high LOI value, but this evaluation is based on a yarn form, and the Literature does not describe a textile form for blocking flame for a long time. In addition, a textile form made by using such a technology without any change is not regarded as having a sufficient ability to block flame for a long time.
Furthermore, Patent Literature 3 discloses a woven fabric of a flame resistant yarn and a flame retardant polyester. Although the fabric exhibits flame retardance because the warp is a flame retardant polyester, a long time contact with flame collapses the fabric structure, and accordingly the fabric lacks the ability to block flame.
The present invention has been made in view of a problem that such a conventional flame retardant textile has, and an object of the present invention is to provide a flame resistant knit fabric having high flame resistance.

Solution to Problem

In order to solve the problem, the flame resistant knit fabric according to the present invention has the following structure. That is,

A flame resistant knit fabric having a thickness of 0.08 mm or more in accordance with the method of JIS L 1096-A (2010) and consisting of a yarn, said yarn comprising: a non-melting fiber A having a high-temperature shrinkage rate of 3% or less; and a thermoplastic fiber B having an LOI value of 25 or more in accordance with JIS K 7201-2 (2007) and having a melting point lower than the ignition temperature of the non-melting fiber A; wherein the yarn has a fracture elongation of more than 5%; and wherein, in the projection area of the knit repeat of the flame resistant knit fabric, the area ratio of the non-melting fiber A is 10% or more and the area ratio of the thermoplastic fiber B is 5% or more.

The flame resistant knit fabric according to the present invention preferably contains a fiber C other than the non-melting fiber A and the thermoplastic fiber B, wherein, in the projection area of the knit repeat of the flame resistant knit fabric, the area ratio of the fiber C is 20% or less.

The non-melting fiber A in the flame resistant knit fabric according to the present invention is preferably selected from the group consisting of a flame retardant fiber, a meta-aramid fiber, a glass fiber, and a mixture thereof.

The thermoplastic fiber B in the flame resistant knit fabric according to the present invention is preferably a fiber composed of a resin selected from the group consisting of polyphenylene sulfide, a flame retardant liquid crystal polyester, a flame retardant poly(alkylene terephthalate), a flame retardant poly(acrylonitrile-butadiene-styrene), a flame retardant polysulfone, a poly(ether-ether-ketone), a poly(ether-ketone-ketone), a polyether sulfone, a polyarylate, a polyphenyl sulfone, a polyether imide, a polyamide-imide, and a mixture thereof.

Effects of Invention

The flame resistant knit fabric according to the present invention has the above-mentioned structure and thus has high flame resistance.

BRIEF DESCRIPTION OF DRAWINGS

Fig. 1 is a schematic illustration showing a flammability test for assessment of flame resistance.
Fig. 2 is a conceptual illustration showing the weave repeat of a plain weave fabric and depicted for the purpose of explaining the projection area of the knit repeat of the knit fabric and the projection area of each fiber.

MODE FOR CARRYING OUT THE INVENTION

The present invention will be described.

«High-temperature Shrinkage Rate»

The high-temperature shrinkage rate herein is a value determined as follows. The fiber used to form the nonwoven fabric is left to stand under standard conditions (20°C, 65% relative humidity) for 12 hours. The initial length $L_0$ of the fiber is measured under a tension of 0.1 cN/dtex. Then, the fiber under no load is exposed to dry heat atmosphere at 290°C for 30 minutes, and then sufficiently cooled under standard conditions (20°C, 65% relative humidity). The length $L_1$ of the fiber is measured under a tension of 0.1 cN/dtex. From $L_0$ and $L_1$, the high-temperature shrinkage rate is determined by the following formula:

$$\text{High-temperature Shrinkage Rate} = [(L_0 - L_1) / L_0] \times 100 \ (\%)$$

In the flame resistant knit fabric according to the present invention, the non-melting fiber A has a high-temperature shrinkage rate of 3% or less. When a flame approaches the fabric, the thermoplastic fiber is melted by the heat, and the molten thermoplastic fiber spreads over the surface of the non-melting fiber (the structural filler) like a thin film. Then, as the temperature of the fabric goes up, both types of fibers are eventually carbonized. When the high-temperature shrinkage rate of the non-melting fiber is more than 3%, the vicinity of the high-temperature portion in contact with flame is shrunk more easily, and, in addition, a thermal stress generated between the high temperature portion and the low-temperature portion not in contact with flame causes a fracture in the fabric more easily, and accordingly the fabric cannot block flame for a long time. In this respect, it is preferable that the high-temperature shrinkage rate is lower and that the fracture elongation of the knit fabric-forming yarn is higher, but, even without shrinkage, large elongation of the fabric by heat may collapse the knit fabric structure and cause flame to penetrate the collapsed portion. Accordingly, the high-temperature shrinkage rate is preferably -5% or more. Particularly preferably, the high-temperature shrinkage rate is from 0 to 2%.

«LOI Value»

The LOI value is the minimum volume percentage of oxygen, in a gas mixture of nitrogen and oxygen, required to sustain combustion of a material. A higher LOI value indicates better flame retardance. Thus, the LOI value of the thermoplastic fiber B in the flame resistant knit fabric according to the present invention is 25 or more in accordance with JIS K 7201-2 (2007). When the LOI value of the thermoplastic fiber B is less than 25, the thermoplastic fiber tends to be more combustible, makes it more difficult to extinguish the flame even with the flame source separated, and does not enable flame-spreading to be prevented. A higher LOI value is preferred, but the upper limit of LOI value of currently available materials is about 65.

«Ignition Temperature»

The ignition temperature is a spontaneous ignition temperature measured by the method based on JIS K 7193 (2010).

«Melting Point»

The melting point is a value measured by the method based on JIS K 7121 (2012). The melting point refers to the value of the melting peak temperature obtained by heating at 10°C/minute.

«Fracture Elongation of Yarn»

The fracture elongation of yarn refers to that which is measured by the method based on JIS L 1095 (2010). Specifically, the fracture elongation is an elongation at which the yarn is fractured in performing a tensile test in which an initial tension of 0.2cN/dtex is applied and in which the test conditions including a specimen length of 200 mm between grips and a tension rate of 100% strain/minute are used. The test is performed 50 times, and the average value for the specimens excluding the ones that are fractured at the grip portions is adopted.

The yarn that form the flame resistant woven fabric according to the present invention have a fracture elongation of 5% or more. When the fracture elongation of the yarn is less than 5%, the knit fabric tends to be fractured by thermal stress generated between the high-temperature portion in contact with flame and the low-temperature portion not in contact with flame, and, as a result, the fabric is unable to block flame for a long time and is impossible to process under tension.

«Non-melting Fiber A»

The non-melting fibers A herein refer to fibers that, when exposed to a flame, are not melted into a liquid but maintain the shape of the fibers. The non-melting fibers are preferably not liquefied nor ignited at a temperature of 700°C, more preferably not liquefied nor ignited at a temperature of 800°C or more. Examples of non-melting fibers having the above-mentioned high-temperature shrinkage rate within the range specified herein include flame resistant fibers, meta-aramid fibers, and glass fibers. Flame resistant fibers are fibers produced by applying flame resistant treatment to raw fibers selected from acrylonitrile fibers, pitch fibers, cellulose fibers, phenol fibers and the like. The non-melting fibers may be of a single type or a combination of two or more types. Of the above exemplified fibers, more preferred ones are flame resistant fibers which have a lower high-temperature shrinkage rate and whose carbonization is promoted by the oxygen insulation effect of the film formed by the contact of the below-mentioned thermoplastic fiber B with flame, thereby further enhancing the heat resistance of the fiber at high temperatures. Of various types of flame resistant fibers, flame resistant yarns made from polyacrylonitrile fiber are more preferred because they have a small specific gravity, flexibility, and excellent flame retardancy. The acrylonitrile-based flame resistant fibers can be produced by heating and oxidizing acrylic fibers as a precursor in air at high temperature. Examples of commercially available acrylonitrile-based flame resistant fibers include flame resistant "PYRON" (registered trademark) fibers manufactured by Zoltek Corporation, which are used in the Examples and the Comparative Examples described later, and "Pyromex" (registered trademark) manufactured by Toho Tenax Co., Ltd. In general, meta-aramid fibers have a high high-temperature shrinkage rate and do not meet the high-temperature shrinkage rate specified herein. However, meta-aramid fibers can be made suitable by a treatment to reduce the high-temperature shrinking rate to fall within the range specified herein. Furthermore, glass fibers generally have a small fracture elongation and do not satisfy the range of fracture elongation specified in the present invention, but can be preferably used as a spun yarn or a glass fiber that is composited with a different material, thus used as a weave fabric-forming yarn, and thereby made to have a fracture elongation according to the present invention.

In addition, non-melting fibers preferably used in the present invention are used singly or according to a method in which a non-melting fiber is composited with a different material, and the fibers may be either a filament form or a staple form. The fiber in staple form to be used for spinning preferably has a length in a range of 30 to 60 mm, more preferably in a range of 38 to 51 mm. A fiber length in a range of 38 to 51 mm makes it possible to form the fiber into a spun yarn in a general spinning process and makes it easy to mix-spin the fiber with a different material. In addition, the thickness of the single fiber of the non-melting fiber is not limited to a particular value, and the fineness of the single fiber is preferably in a range of 0.1 to 10 dtex in the light of passability in a spinning process.

«Thermoplastic Fiber B»

A thermoplastic fiber B used in the present invention has an LOI value of 25 or more as above-mentioned and has a melting point lower than the ignition temperature of the non-melting fiber A. When the LOI value of the thermoplastic fiber B is less than 25, the thermoplastic fiber B cannot inhibit from combusting in the air, and makes it more difficult for the polymer to be carbonized. The thermoplastic fiber B having a melting point equal to or higher than the ignition temperature of the non-melting fiber A causes the molten polymer to volatilize before forming a film on the surface of the non-melting fibers A and between the fibers, and cannot be expected to have a flame resistant effect. The melting point of the thermoplastic fiber B is preferably not less than 200°C lower, more preferably not less than 300°C lower, than the ignition temperature of the non-melting fiber A. Specific examples include a fiber composed of a thermoplastic resin selected from the group consisting of polyphenylene sulfide, a flame retardant liquid crystal polyester, a flame retardant poly(alkylene terephthalate), a flame retardant poly(acrylonitrile-butadiene-styrene), a flame retardant polysulfone, a poly(ether-ether-ketone), a poly(ether-ketone-ketone), a polyether sulfone, a polyarylate, a polyphenyl sulfone, a polyether imide, a polyamide-imide, and a mixture thereof. The thermoplastic fibers may be of a single type or a combination of two or more types. Of the above-mentioned fibers, polyphenylene sulfide fibers (hereinafter also called PPS fibers) are most preferred in the light of their high LOI value, the melting point range, and easy availability. In addition, even if the polymer does not have an LOI value in a range specified in the present invention, the polymer can be used in a preferred manner if the polymer is treated with a flame retardant, thereby allowing the LOI value obtained after the treatment to be in the range specified in the present invention. The flame retardant is not limited to a particular one, and is preferably a phosphorus-based or sulfur-based flame retardant that expresses a mechanism in which to generate a phosphoric acid or a sulfuric acid in thermal decomposition and dehydrate/carbonize the polymer base material.

In addition, the above-mentioned thermoplastic resin as the thermoplastic fiber B used in the present invention is used singly or according to a method in which a thermoplastic resin is composited with a different material, and the thermoplastic fiber may be either a filament form or a staple form. The fiber in staple form to be used for spinning preferably has a length in a range of 30 to 60 mm, more preferably in a range of 38 to 51 mm. A fiber length in a range of 38 to 51 mm makes it possible to form the fiber into a spun yarn in a general spinning process and makes it easy to mix-spin the fiber with a different material. In addition, the thickness of the single fiber of the thermoplastic fiber B is not limited to a particular value, and the fineness of the single fiber is preferably in a range of 0.1 to 10 dtex in the light of passability in a spinning process.

The total fineness of the fiber used in filament form and the yarn count used for the fiber to be made into a spun yarn are not limited to particular values as long as the values satisfy the ranges specified in the present invention, and may be suitably selected, taking a desired thickness into consideration.

PPS fibers, which are preferred in the present invention, are synthetic fibers made from a polymer containing structural units of the formula $-(C_6H_4-S)-$ as primary structural units. Representative examples of the PPS polymer include polyphenylene sulfide, polyphenylene sulfide sulfone, polyphenylene sulfide ketone, random copolymers and block copolymers thereof, mixtures thereof and the like. A particularly preferred and desirable PPS polymer is polyphenylene sulfide containing, preferably 90 mol% or more of, p-phenylene units of the formula $-(C_6H_4-S)-$ as primary structural units. In terms of mass%, a desirable polyphenylene sulfide contains, 80% by mass or more of, preferably 90% by mass or more of, the p-phenylene units.

In addition, PPS fibers preferably used in the present invention are used singly or according to a method in which a PPS fiber is composited with a different material, and the fibers may be either a filament form or a staple form. The fiber in staple form to be used for spinning preferably has a length in a range of 30 to 60 mm, more preferably in a range of 38 to 51 mm. A fiber length in a range of 38 to 51 mm makes it possible to form the fiber into a spun yarn in a general spinning process and makes it easy to mix-spin the fiber with a different material. In addition, the thickness of the single fiber of the PPS fiber is not limited to a particular value, and the fineness of the single fiber is preferably in a range of 0.1 to 10 dtex in the light of passability in a spinning process.

The PPS fibers used in the present invention are preferably produced by melting a polymer containing the phenylene sulfide structural units at a temperature equal to or greater than the melting point of the polymer, and spinning the molten polymer from a spinneret into fibers. The spun fibers are undrawn PPS fibers, which are not yet subjected to a drawing process. Most of the undrawn PPS fiber has an amorphous structure, and has a high fracture elongation. On the other hand, such undrawn fibers have the disadvantage of poor dimensional stability under heat. To overcome this disadvantage, the spun fibers are subjected to a heat-drawing process that orients the fibers and increases the strength and the thermal dimensional stability of the fibers. Such a drawn yarn is commercially available in various types. Commercially available drawn PPS fibers include, for example, "TORCON" (registered trademark) (Toray Industries, Inc.) and "PROCON" (registered trademark) (Toyobo Co., Ltd.).

In the present invention, the undrawn PPS fiber can be used in combination with a drawn yarn to the extent that the ranges according to the present invention are satisfied. Needless to say, instead of PPS fibers, other types of drawn and undrawn yarns that satisfy the requirements disclosed herein can be used in combination.

«Fiber C other than Non-melting Fiber A and Thermoplastic fiber B»

A fiber C may be added to the fabric, in addition to the non-melting fiber A and the thermoplastic fibers B, to impart a particular characteristic. For example, a vinylon fiber, a polyester fiber other than the thermoplastic fiber B, a nylon fiber, and the like may be used in order to enhance the hygroscopicity and water absorbability of the knitted fabric. In addition, a spandex fiber may be used to impart stretchability. Examples of spandex fibers include "LYCRA" (registered trademark) from Toray Opelontex Co., Ltd., "ROICA" (registered trademark) from Asahi Kasei Corporation, "CREORA" (registered trademark) from Hyosung Corporation, and the like. The amount of the fiber C is not limited to a particular value as long as the effects of the present invention are not impaired, and the area ratio of the fiber C other than the non-melting fiber A and the thermoplastic fiber B is preferably 20% or less, more preferably 10% or less, in the projection area of the weave repeat of the flame resistant woven fabric.

The knit fabric according to the present invention has a thickness of 0.08 mm or more, as measured by the method based on JIS L 1096 (2010). The knit fabric preferably has a thickness of 0.3 mm or more. The knit fabric having a thickness of less than 0.08 mm cannot obtain sufficient flame resistance.

The density of the knit fabric according to the present invention is not limited to a particular value, and suitably selected in accordance with form stability, stretchability and the required flame resistant performance.

The form of a yarn used for the knit fabric according to the present invention may be either a spun yarn or a filament yarn.

In a case where a spun yarn is used, the non-melting fiber A and the thermoplastic fiber B may each be used as a spun yarn, or the non-melting fiber A and the thermoplastic fiber B may be mix-spun at a predetermined ratio in a range according to the present invention. In order to obtain sufficient entanglement between pieces of the fiber, the number of crimps of the fiber is preferably 7 crimps/2.54 cm or more, but too large a number of crimps reduces passability in a process in which slivers are made using a carding machine, and accordingly the number of crimps is preferably less than 30 crimps/2.54 cm. In mix-spinning the non-melting fiber A and the thermoplastic fiber B, using both in the form of short fiber having the same length affords a more even spun yarn and hence is preferable. In this regard, the length does not have to be strictly the same, and there may be a difference of about ±5% from the length of the non-melting fiber A. From this viewpoint, the fiber length of the non-melting fiber and the fiber length of the melting fiber are preferably in a range of 30 to 60 mm, more preferably in a range of 38 to 51 mm. A mix-spun yarn is obtained, for example, by carrying out processes in which pieces of fiber are mixed evenly using an opening device and then made into slivers using a carding machine, and the slivers are drawn using a drawing frame and undergo roving and spinning. A plurality of pieces of the obtained spun yarn may be intertwisted.

In a case where a filament is used, a false twisted yarn of each of the non-melting fiber A and the thermoplastic fiber B or a composite of the non-melting fiber A and the thermoplastic fiber B can be used wherein the composite is made using a method such as air filament combining or composite false twisting.

The knit fabric according to the present invention is knitted with using a spun yarn or a filament yarn obtained as above-mentioned and with using flat knitting machine such as flat knitting machine, old fashion knitting machine, circular knitting machine, computer Jacquard knitting machine, socks knitting machine, cylinder knitting machine or warp knitting machine such as tricot knitting machine, Raschel knitting machine air jet weaving machine, Milanese knitting machine. Knitting machine may have a draft yarn feeding device to insert spandex yarn. The knit construction may be selected, in accordance with the texture and design, examples of weft-knit are plain kit, rib knit, pearl knit, tuck knit, float stitch, lace stitch, and derivative kit constructions of these, and examples of warp-knit are single-Denbigh stitch, single-Vandyke stitch, single-cord stitch, Berlin stitch, dagle-Denbigh stich, Atlas stitch, cord stitch, half-tricot knit, satin stitch, sharkskin knit and derivative kit constructions of these.

«Area Ratio»

The knit fabric-forming yarn and the knit structure are such that, in the projection area of the knit repeat of the knit fabric, the area ratio of the non-melting fiber A is 10% or more and the area ratio of the thermoplastic fiber B is 5%. The non-melting fiber A having an area ratio of less than 10% results in having an insufficient function as a structural filler. The non-melting fiber A preferably has an area ratio of 15% or more. The thermoplastic fiber B having an area ratio of less than 5% does not allow the thermoplastic fiber to sufficiently spread in the form of a film among the non-melting fibers which serve as a structural filler. The thermoplastic fiber B preferably has an area ratio of 10% or more.

Below, the method of calculating the area ratio will be described.

Here, the knit repeat of a knit fabric refers to the minimum repeating unit forming the knit fabric. Assuming that the cotton count of a knit fabric-forming yarn is $N_e$ and that the cross-section of the yarn is circular, the diameter D (cm) of the yarn is calculated using the following Equation when the yarn has a density of $\rho$ (g/cm$^3$). The density $\rho$ of the fiber is measured by the method based on ASTM D4018-11.

$$D = 0.08673 \, / \, \{(N_e \times \rho)^{1/2}\}$$

Here, in a case where the woven fabric-forming yarn is a composite of two kinds of fibers: a fiber $\alpha$ and a fiber $\beta$, the density $\rho'$ of the yarn is calculated using the following Equation, assuming that the respective fiber densities are $\rho_\alpha$ and $\rho_\beta$ and that the respective weight mixing ratios are $Wt_\alpha$ and $Wt_\beta$.

$$\rho' = (\rho_\alpha \times Wt_\alpha) + (\rho_\beta \times Wt_\beta)$$

wherein $Wt_\alpha + Wt_\beta = 1$.

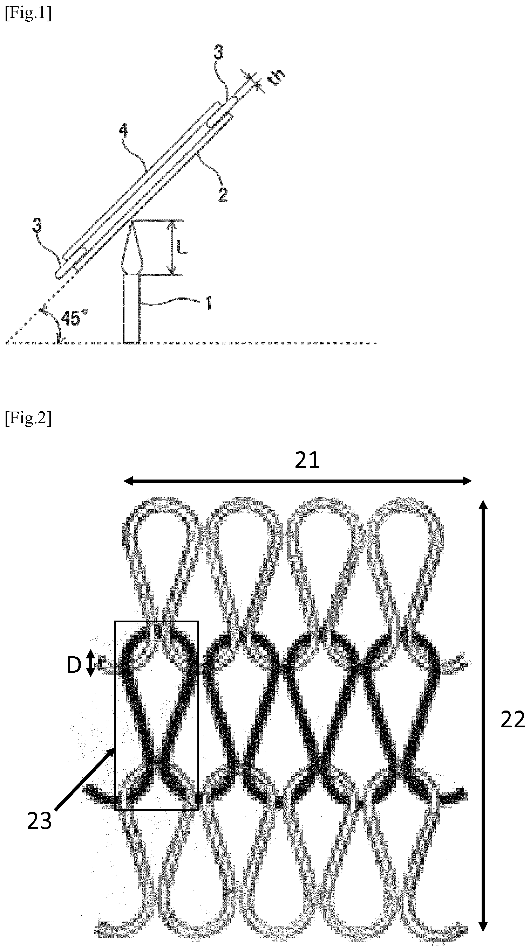

For example, a plain knit is expressed by Fig. 2. Fig. 2 is a conceptual illustration showing the knit repeat of a plain knit fabric and depicted for the purpose of explaining the projection area of the knit repeat of the knit fabric and the projection area of each fiber. Assuming that the crosswise loop density W (wales/inch (2.54 cm)) and that the longitudinal loop density C (courses/inch (2.54cm)) respectively, total loops of $W \times C$ exist per 1 inch (2.54 cm) square.

Assuming that the cross-section of the knit fabric-forming yarn is circular and that knitting does not deform the yarn, the projection diameter of the knit fabric-forming yarn is D. Assuming that the yarn diameter is D, the area S of the yarn in the knit repeat of the knit fabric is calculated using the following Equation.

$$S = \{(D \times L - 4 \times D^2) \times W\} \times C$$

L (cm) represents loop length 23, that is yarn length per one loop. L is calculated by the following equation based on ravelled loop numbers "n" when arbitrary length of knit loop from a knit fabric and yarn length "l" of the ravelled yarn under tension of 0.1 cN/dtex.

$$L = (l \, / \, n)$$

The knit fabric-forming yarn is composed of two kinds of fibers: the fiber $\alpha$ and the fiber $\beta$, and the respective weight mixing ratios are $Wt_\alpha$ and $Wt_\beta$. Accordingly, the volumes $V_\alpha$ and $V_\beta$ of the fiber $\alpha$ and the fiber $\beta$ respectively contained in the knit fabric-forming yarn satisfy the following relationship.

$$(\rho_\alpha \times V_\alpha) : (\rho_\beta \times V_\beta) = Wt_\alpha : Wt_\beta$$

That is,

$$(V_\alpha \, / \, V_\beta) = (\rho_\beta \times Wt_\alpha) \, / \, (\rho_\alpha \times Wt_\beta)$$

Here, no matter what the form in which the two kinds of fibers are composited may be, the thermoplastic fiber B of the flame resistant knit fabric according to the present invention brought into contact with flame is melted and covers the surface of the knit fabric. Accordingly, in the present invention, the area ratios ($S_\alpha/S_\beta$) of the respective fibers in the surface of the knit fabric-forming yarn are regarded as equal to the volume ratios ($V_\alpha/V_\beta$) of the respective fibers, and the projection area of each fiber is calculated by multiplying the projection area of the knit fabric-forming yarn by the area ratio of the fiber.

Since S is the projection area of the weave repeat of the woven fabric, the area ratio $P_\alpha$ of the fiber $\alpha$ and the area ratio $P_\beta$ of the fiber $\beta$ are each calculated using the following Equation and the next Equation.

$$P_\alpha\ (\%) = \{S_\alpha\ /\ (2.54 \times 2.54)\}\ \times 100$$

$$P_\beta\ (\%) = \{S_\beta\ /\ (2.54 \times 2.54)\}\ \times 100$$

Also in a case where the knit fabric-forming yarn contains three or more kinds of fibers, calculations can be made from the weight mixing ratios of the respective fibers using the same procedures as above-mentioned. Calculations can also be made for other knit structures in accordance with the above-mentioned concept. In the case of a multiple layer knit such as a double knit, the projection area of the face exposed to flame is used for calculation.

After kniting, the woven fabric is subjected to scouring by a usual method, and then may be heat-set to a predetermined width and density using a tenter or may be used as a gray fabric. The setting temperature is preferably a temperature at which an effect of suppressing the high-temperature shrinkage rate is obtained, and is preferably 160 to 240°C, more preferably 190 to 230°C.

At the same time as heat setting or in a different process after heat setting, a resin treatment may be carried out for the purposes of improving abrasion resistance or texture to the extent that the effects of the present invention are not impaired. The resin treatment can be selected, depending on the kind of a resin to be used, from: a pad dry cure method in which a woven fabric is dipped in a resin vessel, then squeezed using a padder, dried, and allowed to have the adhered resin; or a pad-steam method in which a resin is allowed to react and adhered to a fabric in a steam vessel.

The thus obtained flame resistant knit fabric according to the present invention has excellent flame resistance and an excellent flame-spreading effect, and accordingly is suitably used for clothing materials, wall materials, floor materials, ceiling materials, coating materials, and the like which require flame retardance, and, in particular, can be suitably used for fireproof protective clothing and coating materials for preventing flame-spreading of urethane sheet materials in automobiles, aircrafts, and the like, and suitably used to prevent flame-spreading of bed mattresses.

EXAMPLES

The present invention will be specifically described with reference to Examples. But the present invention is not limited to these Examples. Various alterations and modifications are possible within the technical scope of the disclosure. The various properties evaluated in the Examples were measured by the following methods.

[Weight]

The mass per unit area was measured in accordance with JIS L 1096 (2010) and expressed in terms of the mass per m$^2$ (g/m$^2$).

[Thickness]

The thickness was measured in accordance with JIS L 1096 (2010).

[LOI Value]

The LOI value was measured in accordance with JIS K 7201-2 (2007).

[Assessment of Flame Resistance]

The flame resistance was assessed by subjecting a specimen to a flame by a modified method based on the A-1 method (the 45° micro burner method) in JIS L 1091 (Testing methods for flammability of textiles, 1999), as follows. As shown in Fig. 1, a micro burner (1) with a flame of 45 mm in length (L) was placed vertically, then a specimen (2) was held at an angle of 45° relative to the horizontal plane, and a combustible object (4) was mounted above the specimen (2) via spacers (3) of 2 mm in thickness (th) inserted between the specimen and the combustible object. The specimen was subjected to burning to assess the flame resistance. As the combustible object (4), a qualitative filter paper, grade 2 (1002) available from GE Healthcare Japan Corporation was used. Before use, the combustible object (4) was left to stand under standard conditions for 24 hours to make the moisture content uniform throughout the object. In the assessment, the time from ignition of the micro burner (1) to the spread of flame to the combustible object (4) was measured in seconds. In this regard, a specimen that has allowed the combustible object 4 to be ignited within three minutes after the specimen came in contact with flame is regarded as "having no flame resistance" and unacceptable. A specimen that does not allow the combustible object 4 to be ignited even after the specimen is exposed to flame for three minutes or more is regarded as "having flame resistance". The longer the flame resisting time is, the better it is. The time from 3 minutes or more to less than 20 minutes is regarded as good, and the time of 20 minutes or more is regarded as excellent.

The terms used in the following Examples and Comparative Examples will be described below.

«Drawn Yarn of PPS Fiber»

"TORCON" (registered trademark), catalog number S371 (made by Toray Industries, Inc.) having a single fiber fineness of 2.2 dtex (14 μm in diameter) and a cut length of 51 mm was used as a drawn PPS fiber. This PPS fiber had an LOI value of 34 and a melting point of 284°C.

«Drawn Yarn of Polyester Fiber»

"TETORON" (registered trademark), catalog number T9615 (made by Toray Industries, Inc.), which is a polyethylene terephthalate fiber having a single fiber fineness of 2.2 dtex (14 μm in diameter), was cut into a length of 51 mm and used as a drawn polyester fiber. This polyester fiber had an LOI value of 22 and a melting point of 256°C.

«Flame Resistant Yarn»

A 1.7 dtex flame resistant fiber made of "PYRON" (registered trademark) made by Zoltek Corporation was cut into a length of 51 mm and used. The "PYRON" (registered trademark) had a high-temperature shrinkage rate of 1.6%. When the fiber was heated by the method based on JIS K 7193 (2010), there was no ignition recognized at 800°C, and the ignition temperature was 800°C or more.

[Example 1]

(Spinning)

The drawn yarn of PPS fiber and the flame resistant yarn were mixed using an opening device, then further mixed using a mixing and scutching machine, and then made into a sliver through a carding machine. The obtained sliver had a weight of 320 grains/6 yards (1 grain = 1/7000 pounds) (20.74 g/5.46 m). Then, the sliver was drawn using a drawing frame set to an eight-fold total draft, and made into a 280 grains/6 yard (18.14 g/5.46 m) sliver. Then, the sliver was twisted to 0.55 T/2.54 cm using a flyer frame and drawn 7.9-fold to obtain a roving of 230 grains/6 yard (14.90 g/5.46 m). Then, the roving was twisted to 16.4 T/2.54 cm using a fine spinning frame, drawn to a 32-fold total draft, and twisted to obtain a spun yarn whose cotton count is No. 40. The obtained spun yarn was given a final twist to 64.7 T/2.54 cm using a two-for-one twister to obtain a No. 30 two folded yarn. The weight mixing ratio of the drawn yarn of PPS fiber to the flame resistant yarn in the spun yarn is 60 to 40. The spun yarn had a tensile strength of 2.2 cN/dtex and a tensile elongation of 20%.

(Knitting)

The obtained spun yarn was knitted using a 20 G-latch needle circular knitting machine into a plain knit. Wale number of the obtained knit was 29 wale/inch (2.54 cm), course number of the obtained knit was 28 course/inch (2.54 cm) and loop length was 0.39 cm/1 loop.

(Scouring and Heat-setting)

The plain weave was scoured in an 80°C warm water containing a surfactant for 20 minutes, then dried using a tenter at 130°C, and further, heat-set using a tenter at 230°C. After the heat-setting, the yarn density of the knit fabric was 31 wale/inch (2.54 cm) and 30 course/inch (2.54 cm). The woven fabric had a thickness of 0.312 mm. According to measurement of the strength and elongation of the raveled yarn, the tensile strength was 2.0 cN/dtex, and the tensile elongation was 18%.

(Assessment of Flame Resistance)

In assessment of flame resistance of the knit fabric of this Example, no spread of flame to the combustible object was observed during 30-minutes exposure to the flame, indicating that the woven fabric had sufficient flame resistance.

[Example 2]

A knit fabric having 21 wale/inch (2.54 cm) and 20 courses/inch (2.54 cm) was obtained by weaving the spun yarn described in Example 1 at 20 wale/inch (2.54 cm) and 20 course/inch (2.54 cm) and carrying out scouring and heat-setting under the same conditions as in Example 1. The knit fabric had a thickness of 0.290 mm. According to measurement of the strength and elongation of the raveled yarn, the tensile strength was 2.1 cN/dtex, and the tensile elongation was 17%.
In assessment of flame resistance of the knit fabric of this Example, no spread of flame to the combustible object was observed during 15-minutes exposure to the flame, indicating that the woven fabric had sufficient flame resistance.

[Example 3]

This Example was carried out under the same conditions as in Example 1 except that the mixing ratio of the PPS to the flame resistant yarn in the spun yarn was 20 to 80. The obtained spun yarn had a tensile strength of 2.3 cN/dtex and a tensile elongation of 19%. After the scouring and heat-setting, the yarn density of the knit fabric was 31 wale/inch (2.54 cm) and 30 course/inch (2.54 cm). The knit fabric had a thickness of 0.324 mm. According to measurement of the strength and elongation of the raveled yarn, the tensile strength was 2.0 cN/dtex, and the tensile elongation was 16%. In assessment of flame resistance of the knit fabric of this Example, no spread of flame to the combustible object was observed during 15-minutes exposure to the flame, indicating that the woven fabric had sufficient flame resistance.

[Example 4]

This Example was carried out under the same conditions as in Example 1 except that the mixing ratio of the PPS to the flame resistant yarn in the spun yarn was to 80 to 20. The obtained spun yarn had a tensile strength of 2.2 cN/dtex and a tensile elongation of 15%. After the scouring and heat-setting, the yarn density of the knit fabric was 31 wale/inch (2.54 cm) and 30 course/inch (2.54 cm). The knit fabric had a thickness of 0.310 mm. According to measurement of the strength and elongation of the raveled yarn, the tensile strength was 1.7 cN/dtex, and the tensile elongation was 16%. In assessment of flame resistance of the knit fabric of this Example, no spread of flame to the combustible object was observed during 30-minutes exposure to the flame, indicating that the woven fabric had sufficient flame resistance.

[Example 5]

This Example was carried out under the same conditions as in Example 1 except that, in addition to the PPS and the flame resistant yarn, a drawn yarn of polyester fiber was mixed in the spun yarn and that the mixing ratio was 50 to 30 to 20. The obtained spun yarn had a tensile strength of 2.3 cN/dtex and a tensile elongation of 20%. After the scouring and heat-setting, the yarn density of the knit fabric was 31 wale/inch (2.54 cm) and 31 course/inch (2.54 cm). The knit fabric had a thickness of 0.321 mm. According to measurement of the strength and elongation of the raveled yarn, the tensile strength was 2.2 cN/dtex, and the tensile elongation was 18%. In assessment of flame resistance of the knit fabric of this Example, no spread of flame to the combustible object was observed during 25-minutes exposure to the flame, indicating that the woven fabric had sufficient flame resistance.

[Example 6]

By using the same spun yarn of Example 1 and further inserting spandex yarn "Lycra" (registered trademark) T-178C having 30 denier (33.3 dtex) fineness at draft ratio of 3.5, knit fabric having total mixing ratio of PPS 55: flame resistant yarn 35: spandex 10 was obtained. Yarn densities after heat setting were 34 wale/inch (2.54 cm) and 33 course/inch (2.54 cm). Further, the knitting fabric had a thickness of 0.412 mm. According to measurement of the strength and elongation of the raveled yarn, the tensile strength was 1.7 cN/dtex, and the tensile elongation was 15%. In assessment of flame resistance of the knit fabric of this Example, no spread of flame to the combustible object was observed during 20-minutes exposure to the flame, indicating that the woven fabric had sufficient flame resistance.

[Comparative Example 1]

A knit fabric having 21 wale/inch (2.54 cm) and 20 courses/inch (2.54 cm) was obtained by knitting the spun yarn described in Example 3 at 20 wale/inch (2.54 cm) and 19 course/inch (2.54 cm) and after carrying out scouring under the same conditions as in Example 1 and successive heat setting at 230°C. Further, the knit fabric had a thickness of 0.287 mm. According to measurement of the strength and elongation of the raveled yarn, the tensile strength was 2.1 cN/dtex, and the tensile elongation was 17%. When the flame resistance of this knit fabric was assessed, the area ratio of the flame resistant yarn was too small, PPS failed to become a sufficient coating between flame resistant fibers, and the flame penetrated the fabric 2 minutes after the contact with flame, and ignited the combustible object.

[Comparative Example 2]

A knit fabric having 18 wale/inch (2.54 cm) and 17 courses/inch (2.54 cm) was obtained by knitting the spun yarn described in Example 4 at 19 wale/inch (2.54 cm) and 18 course/inch (2.54 cm) and after carrying out scouring under the same conditions as in Example 1 and successive heat setting at 230°C. Further, the knit fabric had a thickness of 0.291 mm. According to measurement of the strength and elongation of the raveled yarn, the tensile strength was 1.8 cN/dtex, and the tensile elongation was 17%. When the flame resistance of this knit fabric was assessed, the area ratio of PPS was too small, PPS failed to become a sufficient coating between flame resistant fibers, and the flame penetrated the fabric. Contact with the flame gradually made the flame resistant yarn thinner, and ignited the combustible object 1 minute and 30 seconds after the contact with flame.

[Comparative Example 3]

This Example was carried out under the same conditions as in Example 1 except that, in addition to the PPS and the flame resistant yarn, a drawn yarn of polyester fiber was mixed in the spun yarn and that the mixing ratio was 10 to 10 to 80. The obtained spun yarn had a tensile strength of 2.2 cN/dtex and a tensile elongation of 21%. After the scouring and heat-setting, the yarn density of the knit fabric was 31 wale/inch (2.54 cm) and 31 course/inch (2.54 cm). The knit fabric had a thickness of 0.319 mm. According to measurement of the strength and elongation of the raveled yarn, the tensile strength was 2.1 cN/dtex, and the tensile elongation was 18%. When the flame resistance of this knit fabric was assessed, the area ratio of the flame resistant yarn was too small, and accordingly the knit fabric was significantly shrunk when brought into contact with flame. In addition, PPS failed to become a sufficient coating between flame resistant fibers, further ignited polyester fiber, and ignited the combustible object 30 seconds after the contact with flame.

The following Table 1 shows the area ratios of the non-melting fibers A in Examples 1 to 6 and Comparative Examples 1 to 3, the area ratios of the thermoplastic fibers B having a melting point lower than the ignition temperature of the non-melting fiber A, the area ratios of the other fibers C, the thicknesses of the knit fabrics, and the flame resistance assessment results.

[Table 1]

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Yarn Components of Knit Fabric | | PPS 60%/ Flame Resistant Yarn 40% 40s Spun Yarn | PPS 60%/ Flame Resistant Yarn 40% 40s Spun Yarn | PPS 80%/ Flame Resistant Yarn 20% 40s Spun Yarn | PPS 20%/ Flame Resistant Yarn 80% 40s Spun Yarn | PPS 50%/ Flame Resistant Yarn 30%/ Polyester 20% 40 Spun Yarn | PPS 55%/ Flame Resistant Yarn 35%/ Spandex 10% | PPS 80%/ Flame Resistant Yarn 20% 40s Spun Yarn | PPS 20%/ Flame Resistant Yarn 80% 40s Spun Yarn | PPS 10%/ Flame Resistant Yarn 10%/Polyester 80% 40s Spun Yarn |
| Knit Fabric Design | Knit Construction | Plain Knit | Plain Knit | Plain Knit | Plain Knit | Plain Knit | Plain Knit | Plain Knit | Plain Knit | Plain Knit |
| | Wale Number (Wale/inch (2.54cm)) | 31 | 21 | 31 | 31 | 31 | 34 | 21 | 18 | 31 |
| | Course Number (Course/inch (2.54cm)) | 30 | 20 | 30 | 30 | 31 | 33 | 20 | 17 | 31 |
| | A Non-melting Fiber A Area Ratio (%) | 26 | 12 | 13 | 53 | 28 | 29 | 6 | 17 | 7 |
| | Thermoplastic Fiber B Area Ratio (%) | 40 | 18 | 53 | 14 | 35 | 44 | 24 | 4 | 7 |
| | Other Fiber C Area Ratio (%) | 0 | 0 | 0 | 0 | 14 | 8 | 0 | 0 | 55 |
| | Thickness (mm) | 0.312 | 0.290 | 0.324 | 0.310 | 0.321 | 0.412 | 0.287 | 0.291 | 0.319 |
| Performance | Flame Blocking Propert | Excellent 30 min | Good 15 min | Good 15 min | Excellent 30 min | Excellent 25 min | Excellent 20 min | Bad 2 min | Bad 1 min30 sec | Bad 30 sec |

Industrial Applicability

The present invention is effective to prevent flame-spreading, and accordingly is suitably used for clothing materials, wall materials, floor materials, ceiling materials, coating materials, and the like which require flame retardance, and, in particular, suitably used for fireproof protective clothing and coating materials for preventing flame-spreading of urethane sheet materials in automobiles, aircrafts, and the like, and used to prevent flame-spreading of bed mattresses.

Reference Signs List

1   Micro Burner
2   Specimen
3   Spacer
4   Combustible Object
21  Crosswise loop density W (wales/inch (2.54 cm))
22  Longitudinal loop density C (courses/inch (2.54cm))
D   Diameter of Yarn
23  Loop length

**Claims**

1.  A flame resistant knit fabric having a thickness of 0.08 mm or more in accordance with the method of JIS L 1096-A (2010) and consisting of a yarn, said yarn comprising: a non-melting fiber A having a high-temperature shrinkage rate of 3% or less; and a thermoplastic fiber B having an LOI value of 25 or more in accordance with JIS K 7201-2 (2007) and having a melting point lower than the ignition temperature of said non-melting fiber A; wherein said yarn has a fracture elongation of more than 5%; and wherein, in the projection area of the knit repeat of said flame resistant knit fabric, the area ratio of said non-melting fiber A is 10% or more and the area ratio of said thermoplastic fiber B is 5% or more.

2.  The flame resistant knit fabric according to claim 1, comprising a fiber C other than said non-melting fiber A and said thermoplastic fiber B, wherein, in the projection area of the knit repeat of said flame resistant knit fabric, the area ratio of said fiber C is 20% or less.

3.  The flame resistant knit fabric according to claim 1 or 2, wherein said non-melting fiber A is selected from the group consisting of a flameproofed fiber, a meta-aramid fiber, a glass fiber, and a mixture thereof.

4.  The flame resistant knit fabric according to any one of claims 1 to 3, wherein said thermoplastic fiber B is a fiber composed of a resin selected from the group consisting of polyphenylene sulfide, an anisotropic flame retardant polyester, a flame retardant poly(alkylene terephthalate), a flame retardant poly(acrylonitrile-butadienestyrene), a flame retardant polysulfone, a poly(ether-ether-ketone), a poly(etherketone-ketone), a polyether sulfone, a polyarylate, a polyphenyl sulfone, a polyether imide, a polyamide-imide, and a mixture thereof.

[Fig.1]

[Fig.2]

## INTERNATIONAL SEARCH REPORT

| International application No. |
|---|
| PCT/JP2017/035048 |

### A. CLASSIFICATION OF SUBJECT MATTER
D04B1/16(2006.01)i, D02G3/04(2006.01)i

According to International Patent Classification (IPC) or to both national classification and IPC

### B. FIELDS SEARCHED

Minimum documentation searched (classification system followed by classification symbols)
A41D31/00-31/02, D02G1/00-3/48, D02J1/00-13/00, D04B1/00-39/08

Documentation searched other than minimum documentation to the extent that such documents are included in the fields searched
Published examined utility model applications of Japan     1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)
Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X | WO 2012/102090 A1 (THE JAPAN WOOL TEXTILE CO., LTD.) 02 August 2012 paragraphs [0029], [0046], [0047], [0050] & US 2013/0045653 A1, [0030], [0069], [0073] & EP 2669412 A1 & CN 102884232 A | 1-4 |
| A | JP 2000-192341 A (TORAY INDUSTRIES, INC.) 11 July 2000, (Family: none) | 1-4 |

☒ Further documents are listed in the continuation of Box C.       ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| | |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

| International application No. |
|---|
| PCT/JP2017/035048 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-522056 A (PROPEX GEOSOLUTIONS CORP.) 26 June 2008<br>& US 2006/0116043 A1 & WO 2007/061423 A2 & EP 1861524 A1<br>& KR 10-2007-0100262 A & CN 101263253 A | 1-4 |
| A | JP 2007-023412 A (TORAY INDUSTRIES, INC.) 01 February 2007 (Family: none) | 1-4 |
| A | JP 2014-240532 A (TEIJIN LTD.) 25 December 2014<br>& US 2016/0040326 A1 & WO 2014/199969 A1 & EP 3009547 A1<br>& CN 105283593 A & KR 10-2016-0019463 A | 1-4 |

Form PCT/ISA/210 (continuation of second sheet) (January 2015)

**EP 3 524 721 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11293542 A
- JP 1272836 A
- JP 2005334525 A